# FASCICULE DE BREVET EUROPEEN

(11) **EP 0 332 514 B1**
(45) Date de publication et mention de la délivrance du brevet: **20.05.1998**
(21) Numéro de dépôt: 89400600.6
(22) Date de dépôt: 03.03.1989
(51) Int. Cl.: C08K 13/02, C08L 27/06

(54) **Composition utilisable pour la stabilisation thermique et ultraviolette de résines thermoplastiques et résines thermoplatiques contenant une telle composition stabilisante**
Zusammensetzung zur Wärme- und Ultraviolettstabilisierung von thermoplastischen Harzen und thermoplastische Harze, die eine solche Stabilisatorzusammensetzung enthalten
Composition for the thermal and ultraviolet stabilisation of thermoplastic resins, and thermoplastic resins containing such a stabilizing composition

(30) Priorité: 07.03.1988 FR 8802880
(43) Date de publication de la demande: 13.09.1989
(73) Titulaire: M & T CHEMICALS, INC., Woodbridge, New Jersey 07095 (US)
(72) Inventeur: Ranceze, Dominique, F-64230 Lescar (FR); Boussely, Jean, F-75018 Paris (FR)
(74) Mandataire: Rochet, Michel

(56) Documents cités:
- GB-A- 2 075 989
- CHEMICAL ABSTRACTS, vol. 107, no. 12, 21 septembre 1987, page 41, abstract no. 97694t, Columbus, Ohio, US

## Description

Cette invention est relative à une composition stabilisante de résine thermoplastique et plus précisément de résine thermoplastique contenant des halogènes contre les effets de la chaleur et/ou de la lumière. En particulier, elle a trait à une composition stabilisante ternaire comprenant une hydrotalcite, une zéolithe de zinc et un carboxylate de zinc.

On sait que les résines thermoplastiques contenant des halogènes et/ou des composés à caractère acide provenant des catalyseurs et/ou des monomères et/ou de la post-halogénation, par exemple des résines provenant de monomères ou comonomères contenant des halogènes, telles que le polymère ou les copolymères du chlorure de vinyle, les résines obtenues en utilisant des catalyseurs tels que le trifluorure de bore, le tétrachlorure d'étain ou le persulfate de potassium, et les résines post-halogénées telles que les résines post-chlorées, du fait qu'elles contiennent des halogènes et/ou des composés à caractère acide, peuvent corroder ou rouiller les parties métalliques des moules et machines de moulage. On sait également que ces résines et les produits moulés à partir desdites résines, subissent une dégradation sous l'effet de la chaleur ou d'un rayonnement ultraviolet.

Par exemple, exposées à la chaleur ou à un rayonnement ultraviolet, les résines de chlorure de vinyle subissent une déshydrochloration à l'intérieur de leurs chaînes moléculaires qui provoque à la fois une dégradation et une coloration des résines, la corrosion des moules et des machines de moulage.

Le brevet U.S. 4.299.759 enseigne que les hydrotalcites sont des stabilisants chaleur efficaces pour les résines thermoplastiques. Le brevet U.S. 4.427.816, décrit un système stabilisant binaire constitué d'une β-dicetone et d'une hydrotalcite.

Les hydrotalcites peuvent être représentées par la formule générale :

M₍₁₋ₓ₎ M'ₓ (OH)₂ Aⁿ⁻ _{x/n} , mH₂O (I)

dans laquelle :
- M et M' sont respectivement des cations métalliques divalent et trivalent,
- x satisfait la relation 0 < x ≤ 0,5,
- m est un nombre positif, et Aⁿ⁻ est un anion de valence n.

De préférence, M est le magnésium et M' est l'aluminium, de ce fait, les hydrotalcites répondent à la formule :

Mg ₍₁₋ₓ₎ Alₓ (OH)₂ Aⁿ⁻ _{x/n} , mH₂O

Les anions appropriés comprennent CO₃²⁻, SO₄²⁻, ⁻O₂C-CO₂⁻, HPO₄²⁻ et similaires. Les hydrotalcites choisies ont une surface spécifique inférieure à 30 m²/g et une granulométrie inférieure à 5 microns. De telles hydrotalcites et analogues sont décrites par W.T. Reichle dans "Anionic Clay Minerals" (CHEMTECH, Janvier 1986 p. 58-63) et par S. Miyata dans "Clays and Clays Minerals" (Vol. 31, N° 4, 305 - 311, 1983).

La demande de brevet GB 2075989 décrit une composition à base de résine thermoplastique stabilisée par une hydrotalcite. La demande de brevet JP 62-68839 concerne une résine de PVC ayant une résistance améliorée au phénomène de "plate/out", à la migration des additifs et au blanchiment à l'eau contenant un composé thiazolique ou un acide dithiocarbamique et un carbonate de zinc ou un aluminate de zinc.

Toutefois, les hydrotalcites sont des substances coûteuses et l'on souhaite préparer des compositions stabilisantes efficaces en utilisant une quantité réduite d'hydrotalcite.

L'invention concerne une compostition stabilisante nouvelle et efficace pour des résines thermoplastiques, laquelle composition est un système ternaire, comprenant une hydrotalcite ayant une surface spécifique inférieure à 30m²/g et une granulométrie inférieure à 5 microns, une zéolithe de zinc et un carboxylate de zinc.

La composition selon l'invention, comprend de préférence :
- environ 60 - 80 % en poids d'une hydrotalcite,
- environ 10 - 20 % en poids d'une zéolithe de zinc,
- environ 10 - 20 % en poids d'un carboxylate de zinc.

Les avantages du système ternaire selon l'invention, résident dans une meilleure stabilité à long terme, à la chaleur et à la lumière.

Les hydrotalcites utilisables dans les compositions conformes à l'invention peuvent être choisies parmi les hydrotalcites décrites précédemment.

La zéolithe de zinc est un aluminosilicate du type tamis moléculaire de formule générale :

(Znₐ M"_{b}O), (Al₂ O₃), x' (Si O₂), y (H₂O) (II)

dans laquelle :
- M" est un cation de valence n'
- a et b sont des nombres qui satisfont la relation 2a + bn' = 2 avec a = 0,
- x' est un nombre égal ou supérieur à 1
- et y est un nombre > 0.

Des zéolithes particulièrement appropriées sont des composés où a est compris entre environ 0,1 et environ 1.

Des zéolithes de zinc peuvent être synthétisées par échange de cations à partir des zéolithes de sodium, commercialement disponibles de formule :

(Na₂O, Al₂O₃, x'SiO₂, yH₂O)

Les carboxylates de zinc comprennent les sels des acides carboxyliques, les acides carboxyliques préférés étant les acides gras tels que les acides caprylique, octanoïque, pélargonique, caprique, undécanoique, laurique, myristique, palmitique, stéarique, isostéarique, oléique, linoléique, behénique, subérique, azélaique, sébacique, dioléique, malique, tartrique ou phtalique.

Comme on l'a indiqué précédemment des hydrotalcites appropriées sont mentionnées dans le brevet U.S. 4.299.759 dont le contenu est incorporé par référence dans cette demande.

On utilise tout particulièrement l'hydrotalcite de formule :

Mg_{0,67} Al_{0,33} (OH)₂ (CO₃)_{0,165}, m H₂O

(m étant compris entre 0 et 0,3),vendu par la société KYOWA Chemical Industry Co. Ltd de TOKYO Japon, sous la marque "Alcamizer II".

D'autres additifs peuvent être utilisés dans les compositions de l'invention, tels que des époxydes (par exemple l'huile de ricin ou l'huile de soja époxydée); des dérivés phosphoreux (par exemple le triphényl phosphite ou le diphényldécyl phosphite); des mercaptans (par exemple les thioacides et les thioesters hydroxylés); des anti-oxydants phénoliques, des composés azotés (par exemple les dihydropyridines, l'α-phénylindole, les β-aminocrotonates; les β-dicétones et autres additifs connus par l'homme du métier.

Conformément à cette invention, on stabilise contre la dégradation thermique ou ultraviolette les résines thermoplastiques et notamment les résines contenant des halogènes et/ou des composés à caractère acide apportés par les catalyseurs et/ou les monomères et/ou la post-halogénation y compris les résines oléfiniques, contenant des halogènes provenant des catalyseurs de polymérisation et/ou de post-halogénation.

Les exemples de résines thermoplastiques stabilisables conformément à l'invention, sont des résines thermoplastiques qui contiennent des halogènes et/ou des composés à caractère acide obtenues en utilisant des catalyseurs contenant des halogènes et/ou des composés à caractère acide tels que l'acide sulfurique, le trifluorure de bore, le tétrachlorure d'étain et l'acide chlorhydrique (par exemple les résines polystyréniques, les résines acrylonitrile/styrène (AS), les résines butadiène/styrène (BS), les résines ABS, les résines acryliques ou méthacryliques) ; les résines thermoplastiques contenant des halogènes telles que les polymères ou les copolymères du chlorure de vinyle ; les polymères et les copolymères du chlorure de vinylidène ; des caoutchoucs chlorés ou fluorés tels que le polychlorure de vinyle chloré ; le caoutchouc chloroprène et le caoutchouc d'isobutylène chloré ; le polymère ou les copolymères de chlorure de vinyle post-chloré ; le polymère ou les copolymères d'acétate de vinyle tels que l'acétaté de polyvinyle ou le copolymère d'éthylène et d'acétate de vinyle ; le polytétrafluoroéthylène, les copolymères/éthylène propylène fluoré ; le polychlorotrifluoroéthylène ; les mélanges comprenant au moins deux des polymères, copolymères, résines et caoutchoucs énumérés ci-avant.

Ainsi qu'il a été précisé, l'expression "résines thermoplastiques" contenant des halogènes et/ou des composés à caractère acide, s'applique aux résines oléfiniques contenant des halogènes provenant des catalyseurs de polymérisation et/ou de la post-halogénation. Ainsi, par exemple, les homopolymères et copolymères d'α-oléfines, les copolymères d'au moins une α-oléfine et de diène, les produits post-chlorés de ces polymères et copolymères, et mélanges de ces résines oléfiniques contenant des halogènes, par exemple, le polyéthylène, le polypropylène, le polybutène-1, le polyméthyl pentène-1 et les copolymères d'éthylène-propylène qui sont obtenus en utilisant des catalyseurs type-Ziegler contenant des halogènes, font partie des résines thermoplastiques contenant des composés halogènes et/ou acides employés dans cette invention.

L'invention concerne tout particulièrement une composition dans laquelle la résine thermoplastique est constituée par du PVC et notamment du PVC souple.

Dans le système ternaire de l'invention l'hydrotalcite est employée à des quantités d'envrion 60 à 80 % de la composition. La zéolithe de zinc est utilisée à environ 10 - 20 % de la composition et le carboxylate de zinc est introduit à raison de 10 - 20 % de la composition.

Plus particulièrement, la résine thermoplastique est le PVC souple et le système ternaire comprend environ 65 - 75 % en poids d'hydrotalcite, 12,5 à 17, 5 % en poids de zéolithe de zinc et 12,5 à 17,5 % en poids de carboxylate de zinc.

Les compositions stabilisantes conformes à l'invention peuvent être incorporées dans les résines thermoplastiques à des taux pouvant aller de 0,2 à 10 % en poids (par rapport au poids de la résine). De préférence ce taux est compris entre 0,5 et 3 %.

Dans les exemples non limitatifs qui suivent les échantillons de PVC sont stabilisés au moyen des compositions d'additifs conformément à l'invention et soumis à l'essai de coloration par traitement thermique. Pour ce faire, les différents constituants sont malaxés pendant 5 minutes à 160°C sur un mélangeur à rouleaux.

Les feuilles obtenues ont environ 1 mm d'épaisseur.

L'essai est basé sur la détermination du changement progressif de la couleur qui résulte de la décomposition thermique d'éprouvettes sous forme de bandes de 25 cm de long découpées dans les feuilles mentionnées ci-dessus, qui sont exposées à la chaleur dans un four isolé maintenu à température constante.

En plus de l'enceinte de chauffage, l'appareil d'essai est muni d'un système électromécanique qui permet le déplacement d'un plateau amovible qui porte les éprouvettes et qui peut sortir du four à une vitesse constante prédéterminée.

Un système électronique contrôle la vitesse de déplacement du plateau et la température du four. Le changement de teinte de l'échantillon sorti est observé visuellement pour une température donnée du four et une vitesse de l'essai.

Pour chaque essai, le "temps de stabilité" est le temps écoulé avant que la résine noircisse.

L'évolution de la teinte (coloration) est évaluée selon la classification ci-après :

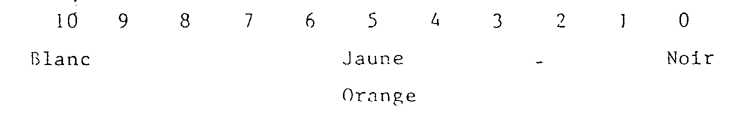

### EXEMPLE 1

### Préparation d'une zéolithe de zinc.

A 150 g de ZnSO₄, 7H₂O dissous dans 300 ml d'eau distillée on ajoute 30 g d'une zéolithe de sodium (type 13 X). Le mélange hétérogène ainsi obtenu est agité à température ambiante pendant 24 heures. La zéolithe de zinc ainsi obtenue est récupérée par filtration, lavée 2 fois avec de l'eau distillée, séchée à 150°C et chauffée à 300°C.

La concentration en zinc est de 13,8 % (% Na = 2,9).

### EXEMPLES 2 à 7

### A - Stabilité thermique (temps)

Un four est réglé à 180°C et on programme la sortie des éprouvettes à 180 minutes.

Les compositions testées contiennent :
a) Base Commune
- 100 parties en poids de PVC, ayant un indice de K = 71
- 60 parties de phtalate de dioctyle
- 5 parties d'huile de soja époxydée

b) Composition Stabilisante

**Tableau I**

| Constituants de la composition (parties) | Exemples N° | | | | | |
|---|---|---|---|---|---|---|
| | 2 | 3 | 4 | 5 | 6 | 7 |
| Hydrotalcite * | 0,7 | 0,7 | 0,7 | 0,7 | 0,7 | 0,7 |
| Stéarate de zinc | 0,3 | 0,2 | 0,15 | 0,1 | 0,05 | - |
| Zéolithe de zinc | - | 0,1 | 0,15 | 0,2 | 0,25 | 0,3 |
| Temps de Stabilité (en minutes) | 141 | >180 | >180 | >180 | >180 | >180 |

| | | | | | | |
|---|---|---|---|---|---|---|
| * Alcamizer I | | | | | | |

### B - Stabilité thermique (couleur)

L'essai d'évaluation de la stabilité de la couleur est réalisé à 180°C pendant des temps variables. Les résultats sont données ci-après.

**Tableau II**

| Temps (minutes) | 0 | 30 | 60 | 80 | 120 | 150 | 180 |
|---|---|---|---|---|---|---|---|
| | Modification de la couleur* | | | | | | |
| Exemple 2 | 10 | 10 | 9 | 8 | 6 | 0 | 0 |
| Exemple 3 | 10 | 10 | 9 | 8 | 8 | 8 | 8 |
| Exemple 4 | 10 | 10 | 9 | 8 | 8 | 8 | 8 |
| Exemple 5 | 10 | 10 | 8 | 7 | 6 | 6 | 6 |
| Exemple 6 | 10 | 10 | 6 | 4 | 4 | 4 | 4 |
| Exemple 7 | 10 | 6 | 5 | 3 | 3 | 3 | 3 |

| | | | | | | | |
|---|---|---|---|---|---|---|---|
| * 10 = inchangé | | | | | | | |

Ces exemples montrent clairement que le système ternaire d'hydrotalcite, de carboxylate de zinc et de zéolithe de zinc, communique une meilleure stabilité (Exemples 3 et 4) que le système hydrotalcite plus carboxylate (Exemple 2).

### C - Modifications des conditions

On renouvelle les essais des exemples 3 à 5 ci-dessous à une température de 200°C et la sortie des éprouvettes est programmée à 120 minutes.

**Tableau III**

| Composition stabilisante | Exemples N° (Rappel) | | |
|---|---|---|---|
| | 3 | 4 | 5 |
| Hydrotalcite | 0,7 | 0,7 | 0,7 |
| Stéarate de zinc | 0,2 | 0,15 | 0,1 |
| Zéolithe de zinc | 0,1 | 0,15 | 0,2 |
| Temps de stabilité (en minutes) | 92 | 105 | 105 |

### Stabilité thermique (couleur)

**Tableau IV**

| Temps (minutes) | 0 | 20 | 40 | 60 | 80 | 100 | 120 |
|---|---|---|---|---|---|---|---|
| | Modification de la couleur | | | | | | |
| Exemple 3 | 10 | 10 | 9 | 6 | 4 | 0 | 0 |
| Exemple 4 | 10 | 10 | 8 | 5 | 5 | 5 | 0 |
| Exemple 5 | 10 | 10 | 7 | 5 | 5 | 5 | 0 |

Ces essais montrent qu'un accroissement du rapport zéolithe de zinc/carboxylate de zinc augmente le temps de stabilité, bien que l'on observe une légère diminution de la stabilité de la couleur.

### EXEMPLES 8 et 9

Ces essais sont réalisés à 180°C, la sortie des éprouvettes est programmée à 300 minutes.

On compare la composition stabilisante de l'exemple 3 à deux compositions contenant d'autres additifs.

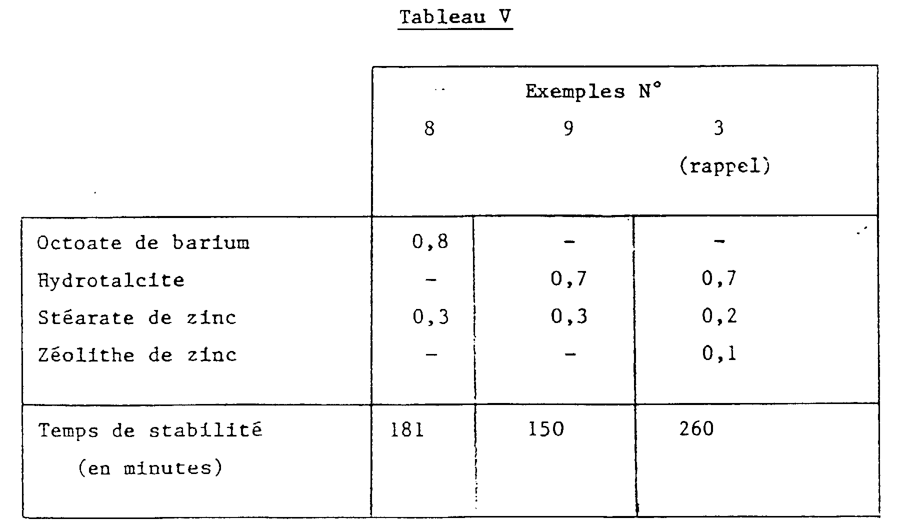

L'évolution de la couleur est indiquée, ci-après :

| Temps (minutes) | 0 | 30 | 60 | 90 | 20 | 150 | 180 | 210 | 240 | 270 | 300 |
|---|---|---|---|---|---|---|---|---|---|---|---|
| | Coloration | | | | | | | | | | |
| Exemple 8 | 10 | 10 | 8 | 7 | 7 | 6 | 1 | 0 | 0 | 0 | 0 |
| Exemple 9 | 10 | 10 | 9 | 8 | 6 | 0 | 0 | 0 | 0 | 0 | 0 |
| Exemple 3 | 10 | 10 | 9 | 8 | 8 | 8 | 8 | 7 | 5 | 0 | 0 |

Ces essais montrent la supériorité du mélange ternaire de l'exemple 3, conformément à l'invention.

### Exemples 10 à 14

Le four est réglé à 180°C avec les éprouvettes laissées dans le four pendant 180 minutes.
a) Base commune :
   - 100 parties en poids de PVC S 110 d'ATOCHEM (France),
   - 50 parties en poids de phthalate de dioctyle,
   - 2 parties en poids d'huile de soja époxydée.
b) Composition stabilisante :
   - L'hydrotalcite est remplacée par le stéarate de calcium. (Voir Tableau VI)

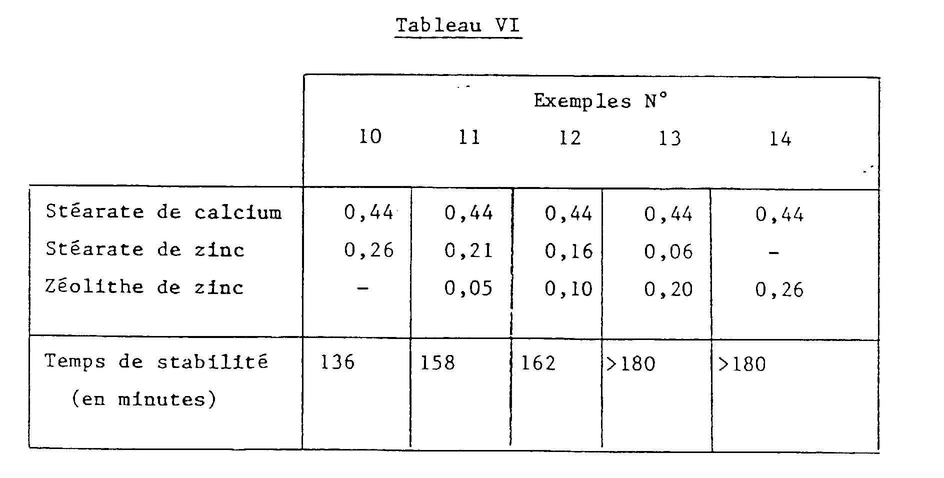

L'évolution de la couleur est indiquée ci-après :

| Temps (minutes) | 0 | 30 | 60 | 90 | 120 | 150 | 180 |
|---|---|---|---|---|---|---|---|
| | Coloration | | | | | | |
| Exemple 10 | 10 | 10 | 9 | 8 | 7 | 0 | 0 |
| Exemple 11 | 10 | 10 | 8 | 7 | 6 | 5 | 0 |
| Exemple 12 | 10 | 10 | 7 | 6 | 5 | 4 | 0 |
| Exemple 13 | 10 | 8 | 5 | 4 | 3 | 2 | 2 |
| Exemple 14 | 10 | 7 | 3 | 3 | 2 | 2 | 2 |

Les résultats montrent qu'une composition ternaire sel de calcium/sel de zinc/zéolithe de zinc n'est pas aussi efficace que le système ternaire de l'invention.

En effet, en présence de sel de calcium, la substitution progressive du sel de zinc par la zéolithe de zinc, entraîne une augmentation du temps de stabilité mais modifie notablement la couleur initiale de PVC.

### Exemples 15 à 19

La température du four est réglée à 180°C et les éprouvettes sont programmées à rester dans le four pendant 300 minutes.

Les compositions testées contiennent :
a) Base commune :
   - 100 parties en poids de PVC S 110 (ATOCHEM),
   - 60 parties en poids de phtalate de dioctyle.
b) Composition stabilisante :

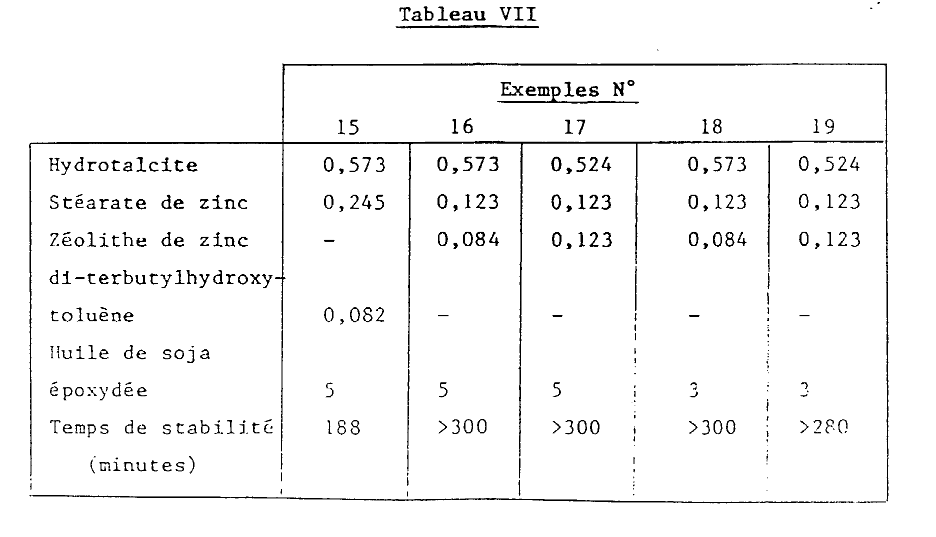

Ces résultats montrent que les compositions ternaires de l'invention sont plus stables thermiquement que les systèmes binaires, même lorsque le niveau du costabilisant tel que l'huile de soja époxydée est abaissé.

Tandis que l'invention a été décrite par rapport à certaines modalités, on comprendra que des variations et des modifications peuvent être apportées par l'homme de l'art sans sortir du cadre de l'invention.

## Revendications

1. Une composition utilisable pour la stabilisation à la chaleur et/ou à la lumière de résines thermoplastiques, caractérisée en ce qu'elle comprend :
a) une hydrotalcite ayant une surface spécifique inférieure à 30 m²/g et une granulométrie inférieure à 5 microns,
b) une zéolithe de zinc et
c) un carboxylate de zinc

2. Une composition selon la revendication 1, caractérisée en ce qu'elle comprend (en poids) :
a) environ 60 à 80 % d'une hydrotalcite
b) environ 10 à 20 % d'une zéolithe de zinc, et
c) environ 10 à 20 % d'un carboxylate de zinc.

3. Une composition selon la revendication 1, caractérisée en ce qu'elle comprend (en poids) :
a) environ 65 à 75 % d'une hydrotalcite
b) environ 12,5 à 17,5 % d'une zéolithe de zinc et
c) environ 12,5 à 17,5 % d'un carboxylate de zinc.

4. Une composition selon l'une quelconque des revendications 1 à 3 dans laquelle :
a) l'hydrotalcite a pour formule générale
M₍₁₋ₓ₎ M'ₓ (OH)₂ Aⁿ⁻ _{x/n} , mH2O (I)
où :
- M et M' sont respectivement des cations métalliques divalent et trivalent,
- x satisfait la relation 0 < x ≤ 0,5,
- m est un nombre positif, et
- Aⁿ⁻ est un anion de valence n ;
b) les zéolithes de zinc ont pour formule générale
(Znₐ M"_{b}O), (Al₂O₃), x'(SiO₂), y (H₂0) (II)
où :
- M" est un cation de valence n',
- a et b sont des nombres qui satisfont la relation 2a + bn' = 2 avec a ≠ 0
- x' est un nombre > 1
- y est un nombre > 0,
c) les carboxylates de zinc sont des acides gras sélectionnés parmi les acides caprylique, octanoique, pélargonique, caprique, undécanoique, laurique, myristique, palmitique, stéarique, isostéarique, oléique, linoléique, linolénique, béhénique, subérique, azélaique, sébacique, dioléique, malique, tartrique et phtalique.

5. Une composition selon l'une quelconque des revendications 1 à 3 dans laquelle :
a) l'hydrotalcite a pour formule générale :
Mg₍₁₋ₓ₎ Alₓ (OH)₂ Aⁿ⁻ _{x/n} , mH2O
dans laquelle les anions Aⁿ⁻ sont :
CO₃ ²⁻, SO₄ ²⁻, ⁻O₂C-CO₂ ⁻ ou HPO₄ ²⁻,
ladite hydrotalcite ayant une surface spécifique inférieure à 30 m²/g et une granulométrie inférieure à 5 microns;
b) la zéolithe est un composé de formule II dans laquelle a est compris entre environ 0,1 et environ 1 et
c) l'acide carboxylique dont dérive le carboxylate de zinc présente un nombre d'atomes de carbone compris entre environ 7 et 17.

6. Une composition selon l'une quelconque des revendications 1 à 3 dans laquelle :
a) l'hydrotalcite a pour formule générale :
Mg_{0,67} Al_{0,33} (OH)₂ (CO₃)_{0,165}, mH₂O
( m étant compris entre 0 et 0,3)
b) la zéolithe de zinc est dérivée d'une zéolithe de sodium de type 13 X et
c) le carboxylate de zinc est le stéarate de zinc

7. Une composition selon l'une quelconque des revendications 1 à 6 qui comprend un ou plusieurs des additifs suivants :
. des époxydes choisis parmi l'huile de ricin ou l'huile de soja époxydée,
. des dérivés phosphoreux choisis parmi le triphénylphosphite ou décyldiphénylphosphite,
. des mercaptans choisis parmi les thioacides ou les thioesters hydroxylés,
. des antioxydants phénoliques,
. des composés azotés choisis parmi les dihydropyridines, α-phénylindole, et β-aminocrotonates,
. et des β-dicétones.

8. Composition de résine thermoplastique comprenant une composition selon l'une quelconque des revendications 1 à 7.

9. Composition de résine thermoplastique contenant des halogènes et/ou des composés à caractère acide comprenant une composition selon l'une quelconque des revendications 1 à 7.

10. Composition selon l'une quelconque des revendications 8 ou 9, dans laquelle la résine thermoplastique est choisie dans le groupe constitué par :
- les résines polystyréniques, les résines acrylonitrile/styrène, butadiène/styrène, acrylonitrile/butadiène/styrène,
- les résines acryliques ou méthacryliques,
- les polymères et copolymères de chlorure de vinyle ou de chlorure de vinylidène,
- les caoutchoucs chlorés ou fluorés,
- les polymères et copolymères de chlorure de vinyle post-chloré,
- les polymères et copolymères d'acétate de vinyle,
- le polytétrafluoroéthylène, les copolymères éthylene/propylène fluoré, le polychlorotrifluoroéthylène,
- les homo-et copolymères d'α-oléfines obtenus à l'aide de catalyseurs Ziegler,
- les mélanges d'au moins deux des résines, polymères, copolymères et caoutchoucs cités ci-avant.

11. Composition selon l'une quelconque des revendications 8 ou 9, caractérisée en ce que la résine comprend du polychlorure de vinyle.

12. Composition selon l'une quelconque des revendications 8 à 11, caractérisée en ce qu'elle contient, pour 100 parties de résine thermoplastique, de 0,2 à 10 parties et de préférence de 0,5 à 3 parties d'une composition selon l'une quelconque des revendications 1 à 7.

## Patentansprüche

1. Zusammensetzung zur Wärme- und/oder Lichtstabilisierung von thermoplastischen Harzen, dadurch gekennzeichnet, daß sie
a) ein Hydrotalcit mit einer spezifischen Oberfläche von weniger als 30 m²/g und einer Teilchengröße von weniger als 5 Micron,
b) ein Zinkzeolith und
c) ein Zinkcarboxylat
enthält.

2. Zusammensetzung nach Anspruch 1, dadurch gekennzeichnet, daß sie (gewichtsbezogen)
a) etwa 60 bis 80 % eines Hydrotalcits,
b) etwa 10 bis 20 % eines Zinkzeoliths und
c) etwa 10 bis 20 % eines Zinkcarboxylats
enthält.

3. Zusammensetzung nach Anspruch 1, dadurch gekennzeichnet, daß sie (gewichtsbezogen)
a) etwa 65 bis 75 % eines Hydrotalcits,
b) etwa 12,5 bis 17,5 % eines Zinkzeoliths und
c) etwa 12,5 bis 17,5 % eines Zinkcarboxylats
enthält.

4. Zusammensetzung nach einem der Ansprüche 1 bis 3, bei der
a) das Hydrotalcit die allgemeine Formel
M₍₁₋ₓ₎M'ₓ(OH)₂Aⁿ⁻ _{x/n}·m H₂O (I)
aufweist, in der:
- M und M' jeweils zweiwertige oder dreiwertige Metallkationen sind,
- x der Bedingung O < x ≤ 0,5 genügt,
- m eine positive Zahl ist und
- Aⁿ⁻ ein Anion mit der Wertigkeit n ist;
b) die Zinkzeolithe die allgemeine Formel
(ZnₐM"_{b} O)·(Al₂O₃)·x'(SiO₂)·y (H₂O) (II)
aufweisen, in der
- M" ein Kation mit der Wertigkeit n' ist,
- a und b Zahlen sind, die der Bedingung 2a + bn' = 2 mit a ≠ 0 folgen,
- x' eine Zahl > 1 ist,
- y eine Zahl > 0 ist;
c) die Zinkcarboxylate Fettsäuren sind, die ausgewählt sind aus Caprylsäure, Octansäure, Pelargonsäure, Caprinsäure, Undecansäure, Laurinsäure, Myristinsäure, Palimitinsäure, Stearinsäure, Isostearinsäure, Oleinsäure, Linolensäure, Behensäure, Suberinsäure, Azelainsäure, Sebacinsäure, Dioleinsäure, Maleinsäure, Weinsäure und Phthalsäure.

5. Zusammensetzung nach einem der Ansprüche 1 bis 3, bei der
a) das Hydrotalcit die allgemeine Formel
Mg₍₁₋ₓ₎Alₓ(OH)₂Aⁿ⁻ _{x/n}·m H₂O
aufweist, in der die Anionen Aⁿ⁻ die folgende Bedeutung haben:
CO₃ ²⁻, SO₄ ²⁻, ⁻O₂C-CO₂ ⁻ oder HPO₄ ²⁻,
wobei das Hydrotalcit eine spezifische Oberfläche von weniger als 30 m²/g und eine Teilchengröße von weniger als 5 Micron aufweist;
b) der Zeolith eine Verbindung der Formel II ist, in der a zwischen etwa 0,1 und etwa 1 liegt und
c) die Carbonsäure, von der sich das Zinkcarboxylat ableitet, eine Kohlenstoffatomanzahl zwischen etwa 7 und 17 ausweist.

6. Zusammensetzung nach einem der Ansprüche 1 bis 3, in der
a) das Hydrotalcit die allgemeine Formel
Mg_{0,67}Al_{0,33}(OH)₂(CO₃)_{0,165}·m H₂O
aufweist (wobei m zwischen 0 und 0,3 liegt);
b) der Zinkzeolith sich von einem Natriumzeolith vom Typ 13 X ableitet und
c) das Zinkcarboxylat Zinkstearat ist.

7. Zusammensetzung nach einem der Ansprüche 1 bis 6, die ein oder mehrere der folgenden Additive enthält:
• Epoxicle, ausgewählt aus Rizinusöl und epoxidiertem Sojaöl;
• Phosphor-derivate, ausgewählt aus Triphenylphosphit und Decyldiphenylphosphit;
• Mercaptane, ausgewählt aus hydroxylierten Thiosäuren oder Thioestern;
• Antioxidantien auf Phenolbasis;
• Stickstoffverbindungen, ausgewählt aus Dihydropyridinen, α-Phenylindol und β-Aminocrotonaten; und
• β-Diketone.

8. Thermoplastische Harzzusammensetzung, enthaltend eine Zusammensetzung nach einem der Ansprüche 1 bis 7.

9. Thermoplastische Harzzusammensetzung, die Halogene und/oder Verbindungen mit saurem Charakter enthält und eine Zusammensetzung nach einem der Ansprüche 1 bis 7 umfaßt.

10. Zusammensetzung nach Anspruch 8 oder 9, in der das thermoplastische Harz ausgewählt ist aus der Gruppe von
- Polystyrolharzen, Acrylnitril/Styrol-Harzen, Butadien/Styrol-Harzen, Acrylnitril/butadien/Styrol-Harzen;
- Acryl- oder Methacrylharzen;
- Vinylchlorid- oder Vinylidenchloridpolymeren und -copolymeren;
- chlorierten und fluorierten Kautschuken;
- nachchlorierten Vinylchloridpolymeren und -copolymeren;
- Vinylacetatpolymeren und -copolymeren;
- Polytetrafluorethylen, Ethylen/Fluorpropylen-Copolymeren und Polychlortrifluorethylen;
- Homo- und Copolymeren von α-Olefinen, erhalten mit Hilfe von Ziegler-Katalysatoren;
- Mischungen von mindestens zwei der zuvor genannten Harze, Polymeren, Copolymeren und Kautschuken.

11. Zusammensetzung nach Anspruch 8 oder 9, dadurch gekennzeichnet daß das Harz Polyvinylchlorid umfaßt.

12. Zusammensetzung nach einem der Ansprüche 8 bis 11, dadurch gekennzeichnet, daß sie auf 100 Teile des thermoplastischen Harzes 0,2 bis 10 Teile, vorzugsweise 0,5 bis 3 Teile, einer Zusammensetzung nach einem der Ansprüche 1 bis 7 enthält.

## Claims

1. Composition which can be used for the heat-and/or light-stabilization of thermoplastic resins, characterized in that it comprises:
a) a hydrotalcite having a specific surface of less than 30 m²/g and a particle size of less than 5 microns,
b) a zinc zeolite, and
c) a zinc carboxylate.

2. Composition according to Claim 1, characterized in that it comprises (on a weight basis);
a) about 60 to 80% of a hydrotalcite,
b) about 10 to 20% of a zinc zeolite, and
c) about 10 to 20% of a zinc carboxylate.

3. Composition according to Claim 1, characterized in that it comprises (on a weight basis) :
a) about 65 to 75% of a hydrotalcite,
b) about 12.5 to 17.5% of a zinc zeolite, and
c) about 12.5 to 17.5% of a zinc carboxylate.

4. Composition according to any one of Claims 1 to 3, in which:
a) the hydrotalcite has the general formula
M₍₁₋ₓ₎M'ₓ(OH)₂Aⁿ⁻ _{x/n}·mH2O (I)
where:
- M and M' are, respectively, divalent and trivalent metal cations,
- x satisfies the relationship 0 < x ≤ 0.5,
- m is a positive number, and
- Aⁿ⁻ is an anion of valency n;
b) the zinc zeolites have the general formula
(ZnₐM"_{b}O) · (Al₂O₃) · x'(SiO₂) · y(H₂O) (II)
where:
- M" is a cation of valency n',
- a and b are numbers which satisfy the relationship 2a + bn' = 2 with a ≠ 0
- x' is a number > 1
- y is a number > 0,
c) the zinc carboxylates are fatty acids selected from caprylic acid, octanoic acid, pelargonic acid, capric acid, undecanoic acid, lauric acid, myristic acid, palmitic acid, stearic acid, isostearic acid, oleic acid, linoleic acid, linolenic acid, behenic acid, suberic acid, azelaic acid, sebacic acid, dioleic acid, malic acid, tartaric acid and phthalic acid.

5. Composition according to any one of Claims 1 to 3, in which:
a) the hydrotalcite has the general formula:
Mg₍₁₋ₓ₎Alₓ(OH)₂Aⁿ⁻ _{x/n}·mH2O
in which the anions Aⁿ⁻ are:
CO₃ ²⁻, SO₄ ²⁻, ⁻O₂C-CO₂ ⁻ or HPO₄ ²⁻,
the said hydrotalcite having a specific surface of less than 30 m²/g and a particle size of less than 5 microns;
b) the zeolite is a compound of formula II in which a is between about 0.1 and about 1, and
c) the carboxylic acid from which the zinc carboxylate is derived has a number of carbon atoms of between about 7 and 17.

6. Composition according to any one of Claims 1 to 3, in which:
a) the hydrotalcite has the general formula:
Mg_{0.67}Al_{0.33}(OH)₂(CO₃)_{0.165}·mH₂O
(m being between 0 and 0.3)
b) the zinc zeolite is derived from a sodium zeolite of 13 X type, and
c) the zinc carboxylate is zinc stearate.

7. Composition according to any one of Claims 1 to 6, which comprises one or more of the following additives:
· epoxides chosen from epoxidized castor oil or epoxidized soybean oil,
· phosphorous derivatives chosen from triphenyl phosphite and decyl diphenyl phosphite,
· mercaptans chosen from hydroxylated thioesters and thioacids,
· phenolic antioxidants,
· nitrogen-containing compounds chosen from dihydropyridines, α-phenylindole and β-aminocrotonates, and
· β-diketones.

8. Thermoplastic resin composition comprising a composition according to any one of Claims 1 to 7.

9. Thermoplastic resin composition containing halogens and/or compounds of acidic nature comprising a composition according to any one of Claims 1 to 7.

10. Composition according to either of Claims 8 and 9, in which the thermoplastic resin is chosen from the group consisting of:
- polystyrene resins and acrylonitrile/styrene, butadiene/styrene or acrylonitrile/butadiene/styrene resins,
- acrylic or methacrylic resins,
- polymers and copolymers of vinyl chloride or of vinylidene chloride,
- chloro or fluoro rubbers,
- polymers and copolymers of post-chlorinated vinyl chloride,
- vinyl acetate polymers and copolymers,
- polytetrafluoroethylene, fluorinated ethylene/propylene copolymers and polychlorotrifluoroethylene,
- α-olefin homo- and copolymers obtained using Ziegler catalysts,
- mixtures of at least two of the resins, polymers, copolymers and rubbers mentioned above.

11. Composition according to either of Claims 8 and 9, characterized in that the resin comprises polyvinyl chloride.

12. Composition according to any one of Claims 8 to 11, characterized in that it contains, per 100 parts of thermoplastic resin, from 0.2 to 10 parts and preferably from 0.5 to 3 parts of a composition according to any one of Claims 1 to 7.
